# EUROPÄISCHE PATENTANMELDUNG

(11) **EP 0 668 437 A1**
(43) Veröffentlichungstag der Anmeldung: **23.08.1995**
(21) Anmeldenummer: 95101522.1
(22) Anmeldetag: 04.02.1995
(51) Int. Cl.: F01N 3/02, F01N 3/20, F01N 3/28

(54) **Verfahren und Vorrichtung zur brennerthermischen Motorabgas-Nachbehandlung**

(30) Priorität: 17.02.1994 DE 4405045
(71) Anmelder: Firma J. Eberspächer, D-73730 Esslingen (DE)
(72) Erfinder: Eberspach, Günter, Dipl.-Ing., D-72649 Wolfschlugen (DE)

(57) **Zusammenfassung**

Verfahren zur brennerthermischen Motorabgas-Nachbehandlung mittels eines Abgasreinigungssystems (ARS), wie eines Partikelfilters mit Fahrbetrieb (Vollstrom) -Regenerator (PF-V), eines Partikelfilters mit Standregenerator (PF-S), eines Katalysators mit Vorheizvorrichtung (KAT) od.dgl., wobei einem Brenner (B) Verbrennungsluft (VL) und Brennstoff (BR) zugeführt werden und das vom Brenner (BR) erzeugte Heißgas (Brennerabgas) (BAG) den Partikelfilter (PF-V, PF-S) bzw. den Katalysator (KAT) durchströmt und dabei ggf. mit dem vom Fahrzeugmotor (M) kommenden Motorabgas (MAG) vermischt wird, dadurch gekennzeichnet, daß das aus dem Partikelfilter (PF-V, PF-S) bzw. Katalysator (KAT) austretende aufgeheizte Brennerabgas-Motorabgas-Gemisch (BAG + MAG) bzw. Brennerabgas (BAG), zumindest teilweise, in Wärmeaustausch (Wärmeaustauscher WA) mit dem zum Partikelfilter (PF-V, PF-S) bzw. Katalysator (KAT) zuzuführenden kühleren Motorabgas (MAG) bzw. mit der zum Brenner (B) zuzuführenden kühleren Verbrennungsluft (VL) gebracht wird.

## Beschreibung

Die Erfindung bezieht sich auf ein Verfahren zur brennerthermischen Motorabgas-Nachbehandlung mittels eines Abgasreinigungssystems, wie eines Partikelfilters mit Fahrbetrieb (Vollstrom) -Regenerator, eines Partikelfilters mit Standregenerator, eines Katalysators mit Vorheizvorrichtung od.dgl., wobei einem Brenner Verbrennungsluft und Brennstoff zugeführt werden und das vom Brenner erzeugte Heißgas (Brennerabgas) den Partikelfilter bzw. den Katalysator durchströmt und dabei ggf. mit dem aus dem Fahrzeugmotor austretenden Motorabgas vermischt wird.

Bei den nach dem vorstehenden Verfahren arbeitenden brennerthermischen Motorabgas-Nachbehandlungssystemen verläßt das vom Brenner aufgeheizte Brennerabgas-Motorabgas-Gemisch bzw. Brennerabgas den Partikelfilter, den Katalysator od.dgl. mit relativ hoher Temperatur. Dadurch können Probleme bei der Gestaltung des Abgasaustritts entstehen. Beispielsweise bei Bussen mit derartigen Partikelfiltersystemen müssen diese aus Platzgründen zuweilen derart räumlich angeordnet werden, daß sich diese hohen Abgasaustrittstemperaturen in kritischen Fahrzeugbereichen befinden, in denen sich Personen aufhalten und/oder brennbare Flüssigkeiten, Gase oder Gegenstände vorhanden sind.

Andererseits muß aber das vom Motor kommende Motorabgas durch den Brenner auf eine ausreichend hohe Temperatur gebracht werden, damit bei der Regeneration eines Partikelfilters, die in diesem abgeschiedenen Partikel überhaupt entzündet werden bzw. damit ein Katalysator eine ausreichend hohe Arbeitstemperatur hat und damit die gewünschten Reaktionsvorgänge in ihm optimal ablaufen können. Hierfür muß dem System über den Brenner entsprechend viel Fremdenergie zugeführt werden, welche die Betriebskosten des Fahrzeugs entsprechend erhöht.

Schließlich reicht insbesondere beim Einsatz der bekannten Partikelfiltersysteme in lärmarmen Fahrzeugen die schalldämpfende Wirkung des Filters nicht aus. Es ist daher ein zusätzlicher Nachschalldämpfer erforderlich, was einen entsprechenden zusätzlichen Aufwand bedeutet.

Der vorliegenden Erfindung liegt die Aufgabe zugrunde, ein einfaches und wirksames Verfahren sowie Vorrichtungen zur brennerthermischen Motorabgas-Nachbehandlung zu schaffen, welche die Nachteile der bekannten Systeme vermeiden und dabei möglichst vielseitig anwendbar sind.

Diese Aufgabe wird bei einem Verfahren der eingangs erwähnten Gattung erfindungsgemäß dadurch gelöst, daß das aus dem Partikelfilter bzw. Katalysator austretende aufgeheizte Brennerabgas-Motorabgas-Gemisch bzw. Brennerabgas, zumindest teilweise, in Wärmeaustausch mit dem zum Partikelfilter bzw. Katalysator zuzuführenden kühleren Motorabgas bzw. mit der zum Brenner zuzuführenden kühleren Verbrennungsluft gebracht wird.

Die Erfindung löst die gestellte Aufgabe mit besonders einfachen Mitteln. Dadurch, daß das vom Brenner aufgeheizte Motorabgas bzw. das Brennerabgas Wärme an das aus dem Verbrennungsmotor kommende Motorabgas bzw. an die in den Brenner geförderte Frischluft abgibt, wird die Abgastemperatur am Abgasaustritt des Fahrzeugs merklich verringert, wodurch die bisher aufgetretenen thermischen Probleme beseitigt werden. Ferner wird der Fremdenergiebedarf des Brenners beträchtlich reduziert. Schließlich ermöglicht es die Erfindung, daß bei entsprechender Ausbildung der Vorrichtung zum Wärmeaustausch nach der Erfindung eine Schallreduzierung erreicht wird.

Eine Vorrichtung zur Durchführung des erfindungsgemäßen Verfahrens, mit einem während des Partikelabbrennvorgangs vom Motorabgas durchströmten Partikelfilter, welchem ein Brenner vorgeschaltet ist (Vollstromregenerator-Vorrichtung), ist dadurch gekennzeichnet, daß sie einen Gas-Gas-Wärmeaustauscher aufweist, der einerseits von dem aus dem Partikelfilter austretenden Brennerabgas-Motorabgas-Gemisch und zwecks Wärmeaustausch mit diesem andererseits von dem vom Fahrzeugmotor kommenden Motorabgas durchströmbar ist.

Mit Vorteil ist eine derartige Vorrichtung mit einem vom Brennerabgas-Motorabgas-Gemisch durchströmbaren, insbesondere Filterkerzen aufweisenden Partikelfilter, wobei die Filterkerzen jeweils aus einem mit Abgas-Durchtrittsöffnungen versehenen, mit Filtermaterial belegten Tragrohr gebildet sind, ferner dadurch gekennzeichnet, daß, insbesondere konzentrisch, innerhalb der Filterkerzen mit Abstand von deren innerer Wandung jeweils ein von dem vom Fahrzeugmotor kommenden Motorabgas, vorzugsweise im Gegenstrom zum Brennerabgas-Motorabgas-Gemisch, durchströmbaren Wärmeaustauscher-Rohr angeordnet ist.

Vorteilhafterweise ist diese Vorrichtung, bei welcher die Filterkerzen in einem mit einerseits einer Mischkammer für das Brennerabgas und das vom Fahrzeugmotor kommende Motorabgas und andererseits einer Austrittskammer versehenen Gehäuse zwischen wenigstens zwei Halteplatten angeordnet sind, weiterhin dadurch gekennzeichnet, daß sich die an ihren beiden Enden jeweils offenen Wärmeaustauscher-Rohre zwischen der der Mischkammer zugeordneten Halteplatte und einer der anderen Halteplatte gegenüberliegenden Wandung der Austrittskammer erstrecken und mit der Mischkammer in offener Verbindung stehen.

Mit Vorteil schließt sich an die der anderen Halteplatte gegenüberliegende, äußere Wandung der Austrittskammer eine Eintrittskammer an, die mit den Wärmeaustauscher-Rohren jeweils in offener Verbindung steht und eine äußere Eintrittsöffnung für das Motorabgas aufweist, wobei die äußere Wandung der Austrittskammer eine Austrittsöffnung für das gereinigte Brennerabgas-Motorabgas-Gemisch aufweist.

Dabei kann vorteilhafterweise die Austrittsöffnung in ein ins Freie führende Endrohr einmünden, welches vorzugsweise die Eintrittskammer axial durchsetzt.

Aus der DE-A-40 04 861 ist es bei einem Partikelfilter mit in einem Gehäuse angeordneten Filterkerzen zwar grundsätzlich bekannt, im Gehäuse parallel zu den Filterkerzen weitere vom Abgas durchströmte Rohre anzuordnen. Bei diesen Rohren handelt es sich jedoch lediglich um Überströmrohre, die von dem gleichen Abgas wie die Filterkerzen durchströmt werden und über mindestens einen Teil ihrer Länge Abgasdurchtrittsöffnungen aufweisen, wodurch eine gleichmäßige Beaufschlagung der Filterkerzen in der Filterungsphase und Freibrennphase erreicht werden soll. Diese bekannte Vorrichtung unterscheidet sich somit in Aufbau und Wirkungsweise wesentlich von der vorliegenden Erfindung.

Eine weitere Vorrichtung zur Durchführung des erfindungsgemäßen Verfahrens, mit einem während des Partikelabbrennvorgangs (Standbetrieb) nicht vom Motorabgas durchströmten Partikelfilter, welchem ein Brenner zugeordnet ist (Standregenerations-Vorrichtung), ist dadurch gekennzeichnet, daß sie einen Gas-Gas-Wärmeaustauscher aufweist, der während des Standbetriebs einerseits von dem aus dem Partikelfilter austretenden Brennerabgas und zwecks Wärmeaustauschs mit diesem andererseits von der dem Brenner zuzuführenden Verbrennungsluft und während des Fahrbetriebs vom Motorabgas durchströmbar ist. Dabei befindet sich zweckmäßigerweise der Wärmeaustauscher in der Verbrennungsluft-Leitung zwischen Verbrennungsluftgebläse und dem Brenner.

Eine nochmals weitere Vorrichtung zur Durchführung des erfindungsgemäßen Verfahrens, mit einem vom Brennerabgas durchströmten Katalysator, welchem ein Brenner vorgeschaltet ist, ist dadurch gekennzeichnet, daß sie einen Gas-Gas-Wärmeaustauscher aufweist, der einerseits von dem aus dem Katalysator austretenden Brennerabgas-Motorabgas-Gemisch und zwecks Wärmeaustauschs mit diesem andererseits von dem vom Fahrzeugmotor kommenden Motorabgas durchströmbar ist. Dabei befindet sich zweckmäßigerweise der Wärmeaustauscher in der Motorabgasleitung zwischen Fahrzeugmotor und Katalysator.

Dadurch, daß die erfindungsgemäße Vorrichtung gemäß einer Weiterbildung der Erfindung zusätzlich zu ihrer Grundfunktion der Abgas-Nachbehandlung noch zum Fahrzeugraum-Beheizen, insbesondere als eigenständiges Luftheizgerät, verwendbar ist, ist sie besonders vielseitig und rationell anwendbar.

Weitere Merkmale und Vorteile der Erfindung ergeben sich aus der nachfolgenden Beschreibung von in der Zeichnung schematisch dargestellten Ausführungsbeispielen. Es zeigen:
Fig. 1: ein Fließschema zur Veranschaulichung einer ersten Ausführung des erfindungsgemäßen Verfahrens sowie der zugehörigen Vorrichtung,
Fig. 2: ein Fließschema analog Fig. 1 zur Veranschaulichung einer zweiten Ausführung des erfindungsgemäßen Verfahrens sowie der zugehörigen Vorrichtung,
Fig. 3: in einem axialen Längsschnitt einen erfindungsgemäßen Partikelfilter mit Vollstromregeneration und
Fig. 4: ein Fließschema analog Fig. 2 zur Veranschaulichung einer zusätzlichen Funktionsweise der erfindungsgemäßen Vorrichtung als Luftheizgerät.

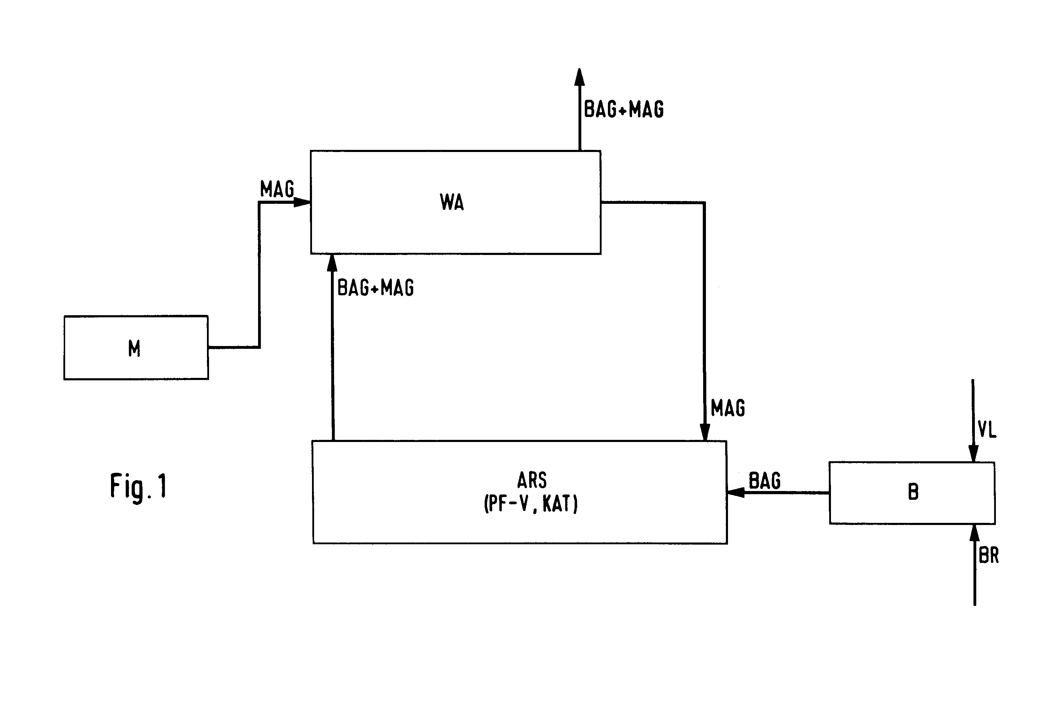

Bei der Schemadarstellung gemäß Fig. 1 zur Veranschaulichung einer ersten Ausführung des erfindungsgemäßen Verfahrens ist ein Abgasreinigungssystem ARS vorgesehen, das durch einen Partikelfilter mit Vollstromregeneration PF-V, einen Katalysator mit Vorheizvorrichtung KAT od.dgl. gebildet ist. Dem Abgasreinigungssystem ARS ist ein Brenner B zugeordnet, welchem Verbrennungsluft VL und Brennstoff BR auf übliche Weise zugeführt werden zwecks Verbrennung zu einem Heißgas (Brennerabgas) BAG. Das heiße Brennerabgas BAG wird dem Abgasreinigungssystem ARS zugeführt, wo es zunächst mit dem vom Fahrzeugmotor M kommenden Motorabgas MAG vermischt wird. Anschließend durchströmt das so erhaltene Brennerabgas-Motorabgas-Gemisch BAG + MAG das Abgasreinigungssystem ARS zwecks Abbrennens der im Partikelfilter PF-V abgeschiedenen Partikel bzw. zwecks Behandlung im somit vorgeheizten Katalysator.

Erfindungsgemäß wird das aus dem Abgasreinigungssystem ARS austretende aufgeheizte Brennerabgas-Motorabgas-Gemisch BAG + MAG in einem Wärmeaustauscher WA in Wärmeaustausch mit dem zum Abgasreinigungssystem ARS zuzuführenden vom Fahrzeugmotor M kommenden Motorabgas MAG gebracht. Hierdurch wird die Temperatur des aus dem Fahrzeug ins Freie austretenden Abgases BAG + MAG (durch den obersten nach oben weisenden Pfeil in Fig. 1 angedeutet) verringert, und gleichzeitig ergibt sich eine entsprechende Reduktion der dem Abgasreinigungssystem ARS über den Brenner zuzuführenden Fremdenergie.

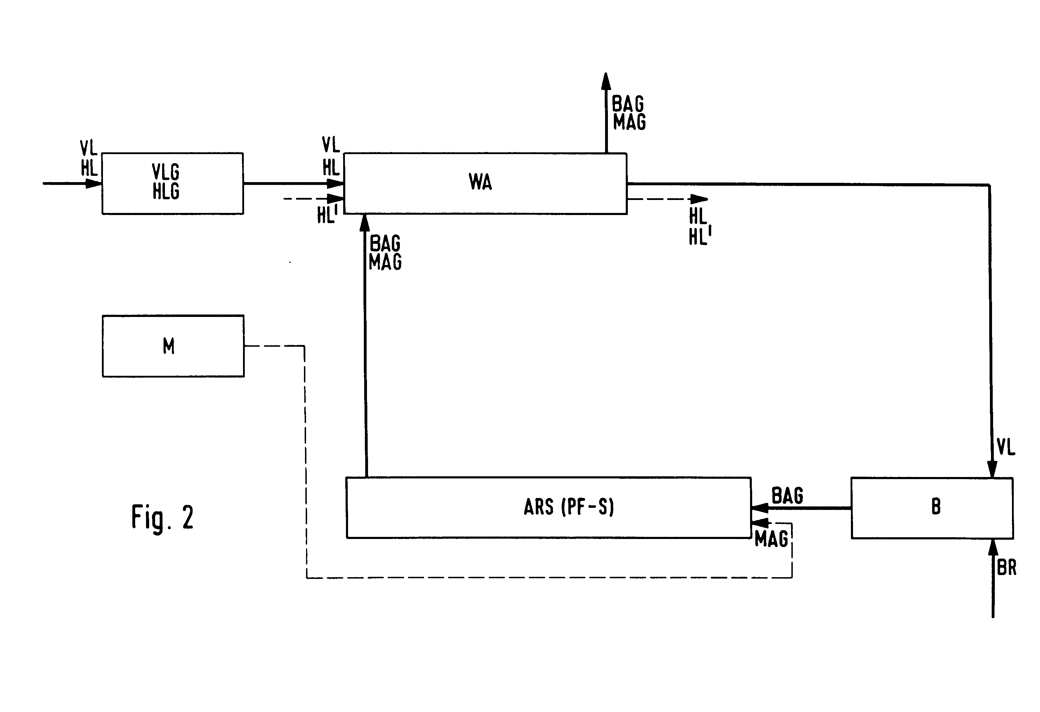

Das in Fig. 2 gezeigte Fließschema dient zur Veranschaulichung einer weiteren Ausführung des erfindungsgemäßen Verfahrens, bei welcher das durch das Abgasreinigungssystem ARS hindurchströmende Brennerabgas BAG nicht mit dem vom Fahrzeugmotor kommenden Motorabgas MAG vermischt wird. Dies ist insbesondere dann der Fall, wenn es sich bei dem Abgasreinigungssystem ARS um einen Partikelfilter mit Standregeneration PF-S handelt. (Eine Nichtvermischung von Brennerabgas und Motorabgas könnte beispielsweise auch dann vorliegen, wenn es sich bei dem Abgasreinigungssystem um einen Katalysator handeln würde, der vor dem Starten des Fahrzeugmotors durch einen Brenner vorgeheizt wird. In der Praxis ist dies jedoch in der Regel nicht der Fall, so daß also bei der Ausbildung des Abgasreinigungssystems als Katalysator in der Regel die Ausführung des erfindungsgemäßen Verfahrens wie in Fig. 1 veranschaulicht verwendet wird).

Zurückkommend auf Fig. 2 ist zunächst zu erwähnen, daß während des Fahrbetriebs des Fahrzeugs das vom Fahrzeugmotor M kommende Motorabgas MAG (wie durch den gestrichelt gezeichneten Pfeil angedeutet) in den Partikelfilter PF-S einströmt, in diesem gereinigt wird und anschließend nach Durchströmen des Wärmeaustauschers WA ins Freie entweicht. (Der Ordnung halber wird darauf hingewiesen, daß im Weg des Motorabgases vom Fahrzeugmotor bis in Freie selbstverständlich auch noch andere Elemente, wie Schalldämpfer etc. vorhanden sind oder sein können. Solche weiteren Elemente sind jedoch bei der Veranschaulichung der vorliegenden Erfindung in den Fig. 1, 2 und 4 der besseren Übersichtlichkeit halber fortgelassen).

Bei stehendem Fahrzeug, d.h. nach Abschalten des Fahrzeugmotors M beginnt dann die Durchführung des Verfahrens nach der Erfindung wie in Fig. 2 mit durchgezogenen Pfeilen veranschaulicht. Dabei werden auch hier dem Brenner B Verbrennungsluft VL und Brennstoff BR zugeführt zwecks Verbrennung und Erzeugung von Heißgas (Brennerabgas) BAG.

Das Brennerabgas BAG wird dem Partikelfilter mit Standregeneration PF-S zugeführt und brennt beim Durchgang durch diesen die in ihm abgeschiedenen Partikel ab. Erfindungsgemäß durchsetzt das Brennerabgas BAG anschließend einen Wärmeaustauscher WA, welcher zwecks Wärmeaustauschs mit diesem andererseits von der vom Verbrennungsluftgebläse (Frischluftgebläse) VLG kommenden Verbrennungsluft VL durchsetzt wird.

Die im Wärmeaustauscher WA somit erwärmte Verbrennungsluft VL wird wie bereits oben erwähnt dem Brenner B zugeführt. Das durch den Wärmeaustauscher WA abgekühlte Brennerabgas BAG verläßt diesen (wie durch den obersten nach oben gerichteten Pfeil in der Zeichnung angedeutet) in vorteilhafter Weise abgekühlt ins Freie. Gleichzeitig ergibt sich durch die vorgenommene Erwärmung der Verbrennungsluft VL im Wärmeaustauscher WA entsprechend auch bei dieser Verfahrensausführung eine Verringerung der dem Brenner B zuzuführenden Fremdenergie.

Andererseits wird dadurch, daß das Motorabgas MAG während des Fahrbetriebs den Wärmeaustauscher WA durchströmt, an diesen ständig vom Motorabgas MAG Wärme abgegeben. Diese an den Wärmeaustauscher WA abgegebene Wärme kann durch Speicherung im Wärmeaustauscher WA zur Erwärmung der Verbrennungsluft VL für den nachfolgenden Regenerationsvorgang mit beitragen. Oder aber die so während des Fahrbetriebs erwärmte Luft kann als Heizluft HL bzw. HL' zu anderen Zwecken dienen, beispielsweise zum einen zur direkten Beheizung (d.h. ohne Zwischenschaltung einer weiteren Zusatzheizung) eines Fahrerhauses, Fahrgastraumes, eines Laderaumes (jeweils zeichnerisch nicht dargestellt) od.dgl. (wozu das in der Zeichnung gezeigte Gebläse die Funktion eines Heizluftgebläses HLG hat) oder zum anderen zur Zufuhr zu einem im Fahrzeug befindlichen Luftheizgerät (zeichnerisch nicht dargestellt) als von diesem weiter aufzuheizendes Medium. Im letzteren Falle kann die Heizluft HL entweder mittels des Heizluftgebläses HLG gefördert werden (so daß das Luftheizgerät grundsätzlich kein eigenes Heizluftgebläse benötigt) oder die Heizluft HL' kann von einem tatsächlich im Luftheizgerät vorhandenen Heizluftgebläse angesaugt werden (so daß das in der Zeichnung enthaltene Heizluftgebläse HLG nicht eingeschaltet zu werden braucht).

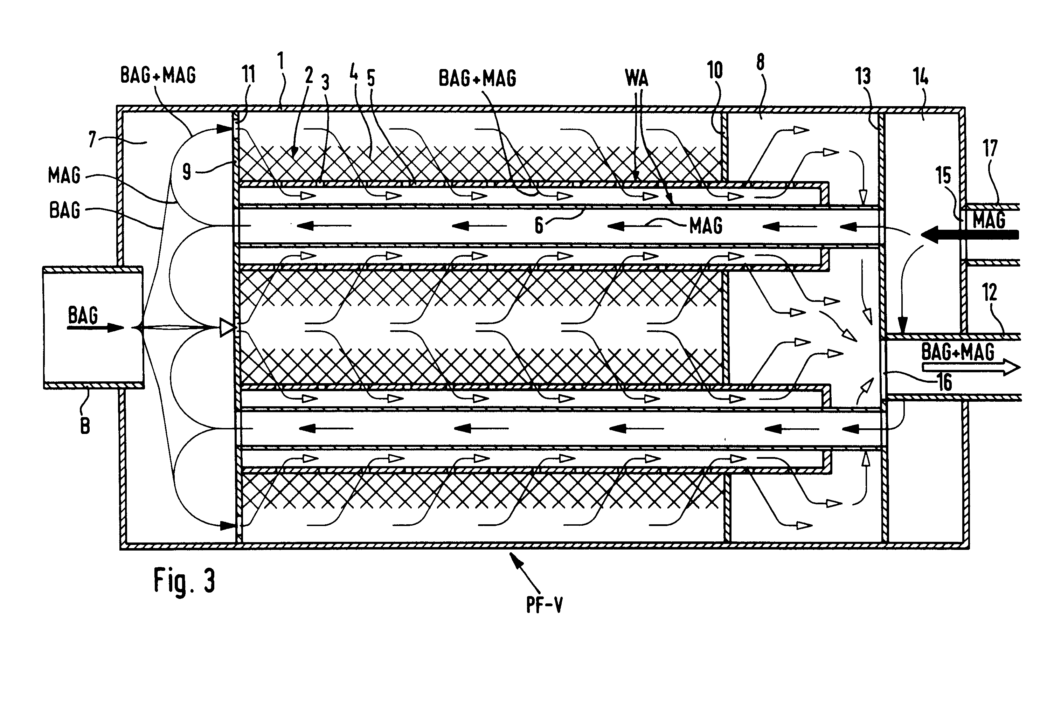

Fig. 3 zeigt im Längsschnitt einen (während des Partikelabbrennvorgangs auch vom Motorabgas durchströmten) Partikelfilter mit Vollstromregenerator-Vorrichtung PF-V, welchem ein Brenner B vorgeschaltet ist und der nach dem in Fig. 1 veranschaulichten erfindungsgemäßen Verfahren arbeitet.

Die in Fig. 3 gezeigte Vorrichtung weist erfindungsgemäß einen Gas-Gas-Wärmeaustauscher WA auf, der einerseits von dem aus dem (nachfolgend noch näher beschriebenen) eigentlichen Partikelfilterelement austretenden BrennerabgasMotorabgas-Gemisch BAG + MAG und zwecks Wärmeaustauschs mit diesem andererseits von dem vom (in der Zeichnung nicht gezeigten) Fahrzeugzeugmotor kommenden Motorabgas MAG durchströmt wird. Auch dies wird später nochmals genauer erläutert.

Der Partikelfilter PF-V weist in einem Gehäuse 1 an sich bekannte sog. Filterkerzen 2 auf, welche jeweils aus einem mit Abgas-Durchtrittsöffnungen 3 versehenen, mit Filtermaterial 4 (beispielsweise Keramikgarnwickel) belegten Tragrohr 5 gebildet sind. Erfindungsgemäß ist jeweils, insbesondere konzentrisch, innerhalb der Filterkerzen 2 mit Abstand von deren innerer Wandung ein Wärmeaustauscher-Rohr 6 angeordnet, welches von dem vom Fahrzeugmotor kommenden Motorabgas MAG im Gegenstrom zum Brennerabgas-Motorabgas-Gemisch BAG + MAG nach dessen Durchtritt durch die Filterkerzen 2 durchströmt wird.

Die Filterkerzen 2 sind in dem mit einerseits einer Mischkammer 7 für das Brennerabgas BAG und das vom Fahrzeugmotor kommende Motorabgas MAG und andererseits einer Austrittskammer 8 versehenen Gehäuse 1 zwischen zwei Halteplatten 9, 10 angeordnet. Die Halteplatte 9 enthält Durchtrittsöffnungen 11 für den Zutritt des Brennerabgas-Motorabgas-Gemischs BAG + MAG zu den Filterkerzen 2.

Das heiße Brennerabgas-Motorabgas-Gemisch BAG + MAG brennt beim Durchtritt durch das Filtermaterial 4 die zuvor bei abgeschaltetem Brenner in diesem abgelagerten Partikel auf an sich bekannte Weise ab. Das so gereinigte Brennerabgas-Motorabgas-Gemisch BAG + MAG (dessen vollzogene Reinigung durch die ungeschwärzte Ausbildung der betreffenden Pfeile in der Zeichnung angedeutet ist) wird anschließend beim Entlangströmen an den Wärmeaustauscher-Rohren 6 von dem in diesen im Gegenstrom strömenden Motorabgas MAG abgekühlt und verläßt schließlich das Gehäuse 1 durch die Austrittskammer 8 und ein ins Freie führendes Endrohr 12.

Die an ihren beiden Enden jeweils offenen Wärmeaustauscher-Rohre 6 erstrecken sich zwischen der der Mischkammer 7 zugeordneten Halteplatte 9 und einer der anderen, geschlossenen Halteplatte 10 gegenüberliegenden Wandung 13 der Austrittskammer 8 und stehen jeweils mit ihrem einen Ende mit der Mischkammer 7 in offener Verbindung. An die der anderen Halteplatte 10 gegenüberliegende, äußere Wandung 13 der Austrittskammer 8 schließt sich eine Eintrittskammer 14 an, die mit den anderen Enden der Wärmeaustauscher-Rohre 6 jeweils in offener Verbindung steht.

Die Eintrittskammer 14 weist eine äußere Eintrittsöffnung 15 für das Motorabgas MAG auf. Die äußere Wandung 13 der Austrittskammer 8 enthält eine Austrittsöffnung 16 für das gereinigte Brennerabgas-Motorabgas-Gemisch BAG + MAG. Die Austrittsöffnung 16 mündet in das Endrohr 12 ein, welches die Eintrittskammer 14 axial durchsetzt. Der Vollständigkeit halber sei noch erwähnt, daß sich auch an die Eintrittsöffnung 15 der Eintrittskammer 14 entsprechend axial ein Eintrittsrohr 17 anschließt.

Das vom Fahrzeugmotor kommende Motorabgas MAG strömt (durch die geschwärzten Pfeile angedeutet) durch das Eintrittsrohr 17 und die Eintrittsöffnung 15 in die Eintrittskammer 14 ein, verteilt sich dort auf sämtliche Wärmeaustauscher-Rohre 6 und durchströmt diese, um anschließend in der Mischkammer 7 mit dem Brennerabgas BAG vermischt zu werden, wonach das resultierende Brennerabgas-Motorabgas-Gemisch BAG + MAG wie bereits erwähnt durch die Durchtrittsöffnungen 11 in der Halteplatte 9 den Filterkerzen 2 zuströmt.

Aufgrund der im Wärmeaustauscher WA vom heißen Brennerabgas-Motorabgas-Gemisch an das kühlere Motorabgas abgegebenen Wärme ergeben sich bei der erfindungsgemäßen Vorrichtung nach Fig. 3 eine niedrigere Temperatur des Abgases als bisher bei dessen Austritt durch das Endrohr 12 ins Freie und gleichzeitig aufgrund der im Wärmeaustauscher WA bewirkten Erhöhung der Temperatur des vom Fahrzeugmotor kommenden Motorabgases MAG ein verringerter Fremdenergiebedarf für den Brenner B. Hierdurch ist die Vorrichtung nach der Erfindung besonders umweltfreundlich. Ferner werden auch die bereits eingangs beschriebenen bisher aufgetretenen thermischen Probleme durch die erfindungsgemäße Vorrichtung beseitigt. Schließlich ergibt sich durch die erfindungsgemäße vollständige Integration des Wärmeaustauschers WA in den Partikelfilter PF-V auf besonders einfache Weise auch eine Schallreduktion. Wie bereits ein Blick auf die Zeichnungsfigur 3 zeigt, ist die Vorrichtung nach der Erfindung in Aufbau und Wirkungsweise äußerst kompakt, wodurch sich für sie ein besonders geringer Bauaufwand und Platzbedarf sowie auch geringe Wärmeverluste durch die vorgenommene Abgasführung in einem einzigen Gehäuse 1 ergeben. Im übrigen ergibt sich bei der erfindungsgemäßen Vorrichtung durch die bessere Nutzung der Brennerwärme auch ein umweltfreundlicherer Abgasausstoß als bisher, insbesondere eine Verminderung der C0₂-Emission.

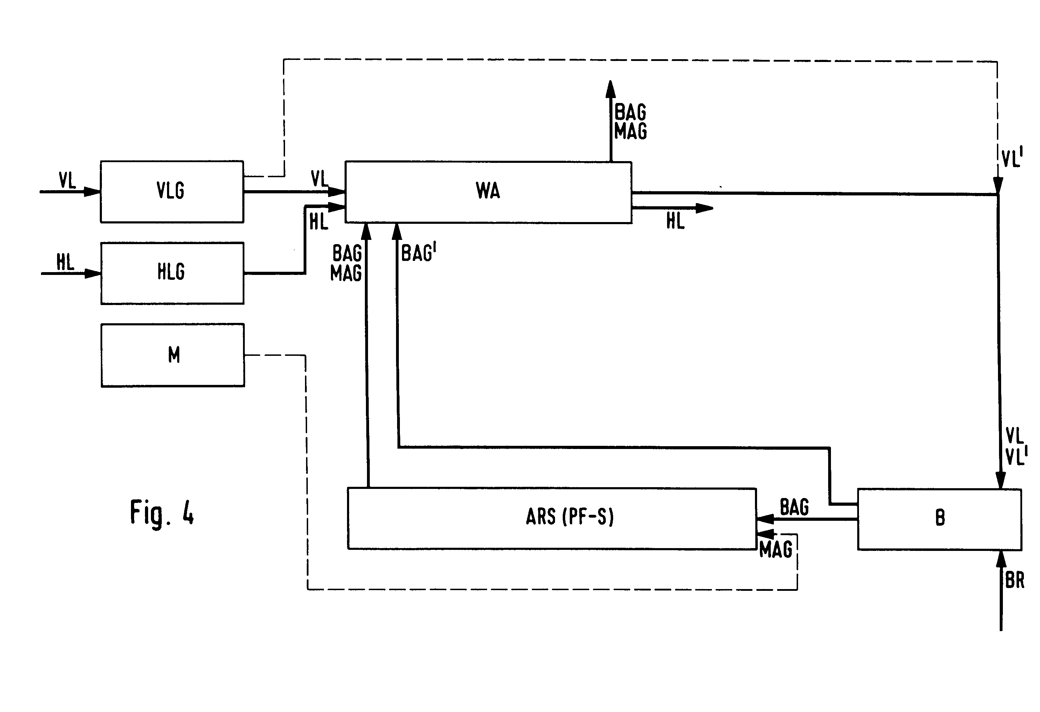

Schließlich zeigt Fig. 4 noch ein Fließschema analog der Fig. 2 zur Veranschaulichung einer zusätzlichen Funktionsweise insbesondere der erfindungsgemäßen Vorrichtung mit Partikelfilter mit Standregeneration PF-S als eigenständiges Luftheizgerät sowohl während des Standbetriebs als auch während des Fahrbetriebs. Hierzu ist im wesentlichen nur ein zusätzliches Heizluftgebläse HLG vorgesehen, während das Verbrennungsluftgebläse VLG ausschließlich zum Fördern von Verbrennungsluft zum Brenner B dient.

Während des Standbetriebs kann der Brenner B immer eingeschaltet sein. Dabei kann die Regenerierung des Partikelfilters PF-S grundsätzlich wie oben anhand von Fig. 2 beschrieben stattfinden und gleichzeitig die Vorrichtung als Luftheizgerät arbeiten, indem das Brennerabgas BAG beim Durchtritt durch den Wärmeaustauscher WA die durch diesen vom Heizluftgebläse HLG geförderte Heizluft HL erwärmt, wonach die erwärmte Heizluft HL direkt in eine Fahrerkabine od.dgl. als Warmluft einströmt. Hierbei kann die Verbrennungsluft VL ebenfalls durch den Wärmeaustauscher WA hindurchgesetzt werden (wozu allerdings ein sog. geteilter Wärmeaustauscher für drei Medien erforderlich wäre) oder einfacher könnte die Verbrennungsluft VL' dem Brenner B unmittelbar zugeführt werden (in der Zeichnung durch den gestrichelten Pfeil angedeutet).

Andererseits könnten während des Standbetriebs die Regenerierung des Partikelfilter PF-S wie anhand von Fig. 2 beschrieben und der Betrieb der Vorrichtung als Luftheizgerät zu unterschiedlichen Zeiten erfolgen. In diesem Fall wird beim Betrieb als Luftheizgerät das Brennerabgas BAG' dem Wärmeaustauscher WA direkt zugeführt, in welchem es die Heizluft HL erwärmt.

Während des Fahrbetriebs hingegen ist der Brenner B immer ausgeschaltet. Das Motorabgas MAG tritt nach Durchströmung des Partikelfilter PF-S in den Wärmeaustauscher WA ein und erwärmt beim Durchtritt durch diesen die vom Heizluftgebläse HLG geförderte Heizluft HL. Diese erwärmte Heizluft HL kann zumindest zur ergänzenden Erwärmung einer Fahrerkabine od.dgl. dienen, nämlich insbesondere dann, wenn der Fahrzeugmotor M besonders wirkungsgradstark ist, also die Kühlwasserwärme zur Erwärmung der Fahrerkabine nicht immer ausreicht. Dabei kann die erwärmte Heizluft HL entweder durch den dortigen Wasser-Luft-Wärmeaustauscher anstelle der dazu üblicherweise verwendeten kalten Frischluft hindurchgeführt werden, oder die erwärmte Heizluft HL kann parallel zur üblicherweise durch den Wasser-Luft-Wärmeaustauscher erwärmten Frischluft direkt in die Fahrerkabine eingeblasen werden.

Durch die vorstehend beispielhaft beschriebenen Möglichkeiten der zusätzlichen Verwendung der erfindungsgemäßen Vorrichtung zu Fahrzeug-Heizzwecken oder als regelrechtes Luftheizgerät ist die Vorrichtung nach der Erfindung praktisch ohne oder mit nur geringem zusätzlichem Aufwand besonders vielseitig anwendbar und kann insbesondere den Einbau eines üblicherweise verwendeten separaten Zusatzheizgeräts einsparen. Dies hat beträchtliche konstruktive Einsparungen sowie eine entsprechende Bauraumeinsparung zur Folge, was gerade bei heutigen Fahrzeugen ein wichtiger Vorteil ist.

Es sei noch angemerkt, daß in den Unteransprüchen enthaltene selbständig schutzfähige Merkmale trotz der vorgenommenen formalen Rückbeziehung auf den Hauptanspruch entsprechenden eigenständigen Schutz haben sollen. Im übrigen fallen sämtliche in den gesamten Anmeldungsunterlagen enthaltenen erfinderischen Merkmale in den Schutzumfang der Erfindung.

## Patentansprüche

1. Verfahren zur brennerthermischen Motorabgas-Nachbehandlung mittels eines Abgasreinigungssystems (ARS), wie eines Partikelfilters mit Fahrbetrieb (Vollstrom) - Regenerator (PF-V), eines Partikelfilters mit Standregenerator (PF-S), eines Katalysators mit Vorheizvorrichtung (KAT) od.dgl., wobei einem Brenner (B) Verbrennungsluft (VL) und Brennstoff (BR) zugeführt werden und das vom Brenner (BR) erzeugte Heißgas (Brennerabgas) (BAG) den Partikelfilter (PF-V, PF-S) bzw. den Katalysator (KAT) durchströmt und dabei ggf. mit dem vom Fahrzeugmotor (M) kommenden Motorabgas (MAG) vermischt wird,
dadurch gekennzeichnet, daß
das aus dem Partikelfilter (PF-V, PF-S) bzw. Katalysator (KAT) austretende aufgeheizte Brennerabgas-Motorabgas-Gemisch
(BAG + MAG) bzw. Brennerabgas (BAG), zumindest teilweise, in Wärmeaustausch (Wärmeaustauscher WA) mit dem zum Partikelfilter (PF-V, PF-S) bzw. Katalysator (KAT) zuzuführenden kühleren Motorabgas (MAG) bzw. mit der zum Brenner (B) zuzuführenden kühleren Verbrennungsluft (VL) gebracht wird.

2. Vorrichtung zur Durchführung des Verfahrens nach Anspruch 1, mit einem während des Partikelabbrennvorgangs vom Motorabgas (MAG) durchströmten Partikelfilter (PF-V), welchem ein Brenner (B) vorgeschaltet ist (Vollstromregenerator-Vorrichtung), dadurch gekennzeichnet, daß sie einen Gas-Gas-Wärmetauscher (WA) aufweist, der einerseits von dem aus dem Partikelfilter (PF-V) austretenden Brennerabgas-Motorabgas-Gemisch (BAG + MAG) und zwecks Wärmeaustauschs mit diesem andererseits von dem vom Fahrzeugmotor (M) kommenden Motorabgas (MAG) durchströmbar ist.

3. Vorrichtung nach Anspruch 2, mit einem vom Brennerabgas-Motorabgas-Gemisch
(BAG + MAG) durchströmbaren, insbesondere Filterkerzen (2) aufweisenden, Partikelfilter (PF-V), wobei die Filterkerzen (2) jeweils aus einem mit Abgas-Durchtrittsöffnungen (3) versehenen, mit Filtermaterial (4) belegten Tragrohr (5) gebildet sind, dadurch gekennzeichnet, daß insbesondere konzentrisch, innerhalb der Filterkerzen (2) mit Abstand von deren innerer Wandung jeweils ein von dem vom Fahrzeugmotor (M) kommenden Motorabgas (MAG), vorzugsweise im Gegenstrom zum Brennerabgas-Motorabgas-Gemisch (BAG + MAG), durchströmbaren Wärmeaustauscher-Rohr (6) angeordnet ist.

4. Vorrichtung nach Anspruch 3, wobei die Filterkerzen (2) in einem mit einerseits einer Mischkammer (7) für das Brennerabgas (BAG) und das vom Fahrzeugmotor (M) kommende Motorabgas (MAG) und andererseits einer Austrittskammer (8) versehenen Gehäuse (1) zwischen wenigstens zwei Halteplatten (9, 10) angeordnet sind, dadurch gekennzeichnet, daß sich die an ihren beiden Enden jeweils offenen Wärmeaustauscher-Rohre (6) zwischen der der Mischkammer (7) zugeordneten Halteplatte (9) und einer der anderen Halteplatte (10) gegenüberliegenden Wandung (13) der Austrittskammer (8) erstrecken und mit der Mischkammer (7) in offener Verbindung stehen.

5. Vorrichtung nach Anspruch 4, dadurch gekennzeichnet, daß sich an die der anderen Halteplatte (10) gegenüberliegende, äußere Wandung (13) der Austrittskammer (8) eine Eintrittskammer (14) anschließt, die mit den Wärmeaustauscher-Rohren (6) jeweils in offener Verbindung steht und eine äußere Eintrittsöffnung (15) für das Motorabgas (MAG) aufweist, wobei die äußere Wandung (13) der Austrittskammer (8) eine Austrittsöffnung (16) für das gereinigte Brennerabgas-Motorabgas-Gemisch (BAG + MAG) aufweist.

6. Vorrichtung nach Anspruch 5, dadurch gekennzeichnet, daß die Austrittsöffnung (16) in ein ins Freie führendes Endrohr (12) einmündet, welches vorzugsweise die Eintrittskammer (14) axial durchsetzt.

7. Vorrichtung zur Durchführung des Verfahrens nach Anspruch 1, mit einem während des Partikelabbrennvorgangs (Standbetrieb) nicht vom Motorabgas (MAG) durchströmten Partikelfilter (PF-S), welchem ein Brenner (B) zugeordnet ist (Standregenerations-Vorrichtung), dadurch gekennzeichnet, daß sie einen Gas-Gas-Wärmeaustauscher (WA) aufweist, der während des Standbetriebs einerseits von dem aus dem Partikelfilter (PF-S) austretenden Brennerabgas (BAG) und zwecks Wärmeaustauschs mit diesem andererseits von der dem Brenner (B) zuzuführenden Verbrennungsluft (VL) und während des Fahrbetriebs vom Motorabgas (MAG) durchströmbar ist.

8. Vorrichtung nach Anspruch 7, dadurch gekennzeichnet, daß sich der Wärmeaustauscher (WA) in der Verbrennungsluft-Leitung zwischen Verbrennungsluftgebläse (VLG) und dem Brenner (B) befindet.

9. Vorrichtung zur Durchführung des Verfahrens nach Anspruch 1, mit einem vom Motorabgas durchströmten Katalysator, welchem ein Brenner vorgeschaltet ist, dadurch gekennzeichnet, daß sie einen Gas-Gas-Wärmeaustauscher (WA) aufweist, der einerseits von dem aus dem Katalysator (KAT) austretenden Brennerabgas-Motorabgas-Gemisch (BAG + MAG) und zwecks Wärmeaustauschs mit diesem andererseits von dem vom Fahrzeugmotor (M) kommenden Motorabgas (MAG) durchströmbar ist.

10. Vorrichtung nach Anspruch 9, dadurch gekennzeichnet, daß sich der Wärmeaustauscher (WA) in der Motorabgasleitung zwischen Fahrzeugmotor (M) und Katalysator (KAT) befindet.

11. Verwendung der Vorrichtung nach einem der Ansprüche 2 bis 10 zum Fahrzeugraum-Beheizen, insbesondere als eigenständiges Luftheizgerät (Fig. 2 und 4).
